# EUROPEAN PATENT APPLICATION

(11) **EP 4 645 263 A1**
(43) Date of publication of application: **05.11.2025**
(21) Application number: 24174118.0
(22) Date of filing: 03.05.2024
(51) Int. Cl.: G06V 20/58, G06T 15/00, G06V 20/59, G06V 20/64, B60W 30/08, G06V 20/20

(54) **METHOD AND SYSTEM FOR IMPROVING VISION OF A VEHICLE'S ENVIRONMENT FOR A USER OF THE VEHICLE**

(71) Applicant: Aptiv Technologies AG, 8200 Schaffhausen (CH)
(72) Inventor: PAUS, Andre, 8200 Schaffhausen (CH); BLANIK, Nikolai, 8200 Schaffhausen (CH)
(74) Representative: Bardehle Pagenberg Partnerschaft mbB Patentanwälte Rechtsanwälte

(57) **Abstract**

The present invention concerns a computer-implemented method for improving vision of a vehicle's environment for one or more users of the vehicle. The method comprises the steps of aggregating, by a perception module of the vehicle, sensor data provided by a plurality of sensors of the vehicle; constructing, by the perception module, a three-dimensional, 3D, visual world model, based on the aggregated sensor data, the 3D visual world model representing the vehicle and the vehicle's environment; rendering, by a visualization module of the vehicle, a user's view of the vehicle's environment, based on the constructed 3D visual world model; and providing, by the visualization module, the rendered view to one or more displays for use by one or more users of the vehicle. Further aspects relate to a corresponding system, and a corresponding computer-readable storage medium.

## Description

### Field of the invention

The present disclosure relates to a computer-implemented method, a corresponding system, and a corresponding computer-readable storage medium for improving vision of a vehicle's environment for a user of the vehicle.

### Background

For a human driver of a vehicle such as a car, vision is probably the most important sense. However, already parts of the vehicle itself may obstruct the view of the scenery and the vehicle's environment, such as the pillars of the vehicle cabin. As a consequence, the view to other road users or road objects such as low pillars, fences, poles, or walls may be obstructed by the vehicle's hull. Some vehicles such as trucks do not have a rear window, and thus the driver would need support by another human behind the vehicle to monitor the situation and provide guidance to the driver, e.g., in case the vehicle reverses, and when parking in and out, to indicate the vehicle's distance to nearby objects. Trucks usually have blind spots such that an area directly next to the driver's cabin may not be visible in spite of specific mirrors, which may lead to dangerous situations for other road users when a truck takes a turn, in particular for cyclists and pedestrians.

There are ways to improve driver vision, e.g., by ensuring that cabin columns are sufficiently narrow to not block the driver's vision and to maximize window sizes. Internal and external mirrors may be provided to provide the driver with a view of the environment behind the car. For larger vehicles like busses and trucks, several mirrors may increase the visible field. In addition, rear cameras and a corresponding monitor in the driver cabin may help to reduce accidents when driving in reverse gear. Alternatively or in addition to cameras, ultrasonic sensors located in the vehicle's hull may be provided to measure the distance to nearby objects and provide corresponding information acoustically or visually to the vehicle's driver. There are also additional camera and radar based systems available, such as lane change and distance warning. While such measures may significantly improve driver vision, the amount of information available to the driver from these measures may be overwhelming and challenging to a human driver. This may result in a human driver relying on only some of the available measures, e.g., solely on the information provided by cameras and/or distance sensors to a monitor, and not making use of other measures to inspect the vehicle's environment, such as mirrors and windows.

Especially when driving in reverse gear it is important that the driver turns around to get sight of the situation behind the vehicle, which however poses the problem that a monitor (which is usually installed in the vehicle's front) gets out of sight. In addition, it is important that the driver looks into the various mirrors, and listens to acoustic information provided by ultrasonic distance sensors. Consequently, the driver would have to frequently look back and forth, as well as look to the mirrors, to not miss relevant information.

Another issue arises from the fact that camera monitors may show a view to the scenery around the vehicle differently than mirrors or a look through the windows. For instance, objects in a monitor may appear small and distant and suddenly become big in the camera image. Further, protruding objects may not be visible as such. Generally, providing a view with stereoscopic depth is not possible by using camera monitors. In addition, the wider environment of the vehicle is usually not visible when using a back camera and a corresponding monitor. As a result, cross traffic outside the visual field of the camera may not be visible to the driver if he solely relies on the camera monitor, without turning around to look through the windows and into the mirrors. This poses the danger of accidents, e.g., when driving in reverse gear out of a parking spot.

Hence, while various individual driver assistance systems and measures are available for vehicles in addition to windows and mirrors, there is a need to provide methods and systems for improving vision of a vehicle's environment for a driver of the vehicle to avoid the above discussed drawback of existing approaches, which may be challenging and sometimes overwhelming due to the sheer amount of information provided to the diver.

### Summary of the invention

Aspects of the present disclosure are set out in the accompanying independent and dependent claims. Combinations of features from the dependent claims may be combined with features of the independent claims as appropriate and not merely as explicitly set out in the claims.

In an aspect, the present invention concerns a computer-implemented method for improving vision of a vehicle's environment for one or more users of the vehicle. The method comprises the steps of aggregating, by a perception module of the vehicle, sensor data provided by a plurality of sensors of the vehicle; constructing, by the perception module, a three-dimensional, 3D, visual world model, based on the aggregated sensor data, the 3D visual world model representing the vehicle and the vehicle's environment; rendering, by a visualization module of the vehicle, a user's view of the vehicle's environment, based on the constructed 3D visual world model; and providing, by the visualization module, the rendered view to one or more displays for use by one or more users of the vehicle.

The present invention allows to create one consistent visual interface to users of a vehicle, such as the driver (placed within the vehicle or remote-controlling the vehicle), a co-pilot and other passengers, to capture all the vehicle sensor information. The above described problems of on the one hand sight reduced visibility inside of a vehicle and on the other hand an overwhelming amount of information provided to, e.g., the driver by diverse sensors and user interfaces such as acoustic information, driver monitor, mirrors and windows are avoided by the present invention by fusing all information of diverse sensors into a consolidated 3D visual model of the environment, and providing this model visually as an additional layer over the physically visible sight, e.g., in the vehicle. The fusion of information of external sensors, the creation of a 3D model of the environment and its display in, e.g., an AR/VR environment according to the invention allows a vehicle user, such as the driver, a co-pilot, or another passenger, to focus on information which is most relevant in a certain scenario. In addition, a vehicle user such as the driver is no longer forced to switch back and forth between, e.g., displays, mirrors and windows, which are usually located in different positions in and around the vehicle. Generally, the present invention reduces the likelihood of missing, overlooking, or misjudging information important and relevant in a certain scenario. Furthermore, the invention allows to display and, e.g., highlight objects that were previously barely or even not recognizable at all. The field of vision for users of a vehicle can be extended from the fixed angle of a reversing camera and the limited viewing angles through the vehicle windows to a complete 360° environment. Any parts of the vehicle's bodywork or hull, even passengers or other objects within the vehicle, can be completely blanked out or made translucent, as required. This is particularly useful for vehicles that do not have a rear window at all due to their design, or where the view is obstructed, e.g., by other passengers or a load within the vehicle, such as in the case of busses or trucks.

In an embodiment, the aggregated sensor data comprises one or more of current sensor data, previously recorded sensor data obtained from a sensor data history buffer, and generated sensor data for complementing the aggregated sensor data. The generated sensor data may comprise, e.g., data regarding portions of the vehicle's environment not visible to the plurality of sensors.

Accordingly, the present invention allows to provide an augmented view of the environment rendered directly from, e.g., images of 360° environment cameras. It is also possible to additionally consider further sensor data (e.g., camera images) obtained from a history buffer of the sensors. Hence, the present invention enables an augmented visualization of the environment also based on previously recorded data to, e.g., show trajectories of objects in the environment, and more generally to show changes in the environment over time. Alternatively or in addition, sensor data may be created generatively, which allows, e.g., to complement the aggregated sensor data for portions that are not visible to the sensors, e.g., due to perspective.

In a further embodiment, the constructed 3D visual world comprises positional information and visual property information regarding the vehicle's environment determined based on the aggregated sensor data, to enable a rendering of a realistic view of the vehicle's environment.

In a further embodiment, the method comprises detecting, by the perception module, one or more objects in the vicinity of the vehicle based on the aggregated sensor data. Accordingly, constructing the 3D visual world model is further based on the detected objects, and rendering the view of the vehicle's environment further comprises including visual representations of the detected objects in the rendered view.

In a further embodiment, the method comprises identifying, by an interpretation module, one or more of the detected objects as objects relevant for one or more users of the vehicle.

In a further embodiment, identifying one or more of the detected objects as objects relevant for one or more users of the vehicle comprises determining a set of driving parameters for the vehicle, including at least one of velocity and steering angle. Based on the determined set of driving parameters and the positional information and visual property information comprised in the 3D visual world model, objects may be determined as relevant for the one or more users of the vehicle by evaluating, for each of the detected objects, if the respective detected object is one or more of the following: an object with reduced visibility such that the object is only visible to the user to a limited extent; a collision risk static object such that there is a risk of a collision between the vehicle and the collision risk static object; and a collision risk moving object such that there is a risk of a collision between the vehicle and the collision risk moving object.

Accordingly, the present invention allows to identify objects which, e.g., pose a danger of collision with the vehicle, to highlight or otherwise mark such objects in the augmented view.

In a further embodiment, evaluating, for each of the detected objects, if the respective detected object is a collision risk static object comprises determining a time to collision of the vehicle with the respective detected object based on the determined set of driving parameters and the 3D visual world model.

In a further embodiment, alternatively or in addition, evaluating, for each of the detected objects, if the respective detected object is a collision risk moving object comprises predicting a trajectory of the respective detected object. Based on the predicted trajectory, the determined set of driving parameters and the 3D visual world model, a time to collision of the vehicle with the respective detected object may be determined.

In a further embodiment, the identified relevant objects may be sorted based on the determined time to collision of the vehicle with the respective detected object. Less relevant objects may then be removed from the sorted identified relevant objects, to maintain only a subset of most relevant objects.

Accordingly, the invention allows to sort the relevant objections by urgency for the vehicle users, such as the driver and/or a co-pilot, and to make a selection of the relevant objections, such that risk and the avoidance of an information overload for the vehicle users are balanced.

In a further embodiment, rendering the view of the vehicle's environment further comprises augmenting one or more of the visual representations of the detected objects in the rendered view with additional visual information. Alternatively or in addition, the rendered view may be augmented by adding at least one object to the rendered view.

In this way, relevant objects in a vehicle's user's field of view can be highlighted or otherwise adapted or enhanced, to attract the user's attention. An example scenario of adding a new object to the rendered view may include, when switching to reverse gear, a sufficiently large virtual mirror in front of the user, showing the environment in the rear of the vehicle. A virtual mirror created in rendered view may allow to avoid a rotation of the user's virtual perspective, as such rotation can lead to disorientation and nausea.

In a further embodiment, augmenting one or more of the visual representations of the detected objects in the rendered view with additional visual information comprises augmenting the one or more of the visual representations of the detected objects in the rendered view with a predicted trajectory of the vehicle, and/or augmenting the one or more of the visual representations of the detected objects in the rendered view with markings indicating an extent of the vehicle as a boundary line along the predicted trajectory. The extent may comprise a shape of the vehicle's hull including, e.g, the vehicle's wheels, and may further comprise, e.g., a safety buffer around the vehicle.

Accordingly, additional visual information is provided to the vehicle's users for the relevant objects in the environment, e.g., by highlighting certain objects, indicating the vehicle's own and other object's predicted directions of movement, indicating distances from the vehicle to objects, and information from additional driver assistance systems. This may further reduce the collision risk, without additional effort from the vehicle users such as the driver.

In a further embodiment, the vehicle's hull is adjustable by the one or more users of the vehicle. In this way, a user of the vehicle may adjust the rendered view to a specific vehicle, including a car model and type, e.g., a red convertible with open roof. Other types of vehicles are possible, such a plane or a spaceship, e.g., in the context of gamification.

In a further embodiment, rendering the view of the vehicle's environment further comprises determining the user's position in relation to the vehicle's position in the environment based on a position and an orientation of the user's head, and alternatively or in addition a viewing direction of the user. Based on the determining, a virtual position of the user in the 3D visual world model may be adjusted, and the view may accordingly be rendered based on the adjusted virtual position of the user.

Accordingly, the present invention allows to consider the user's head position and orientation in relation to the environment, as well as (alternatively or in addition) the user's direction of view, to render a view to the vehicle's environment with a consistent perspective, which in turn ensures an unobstructed view of the vehicle's environment. In particular, this allows to adapt the rendered view of the augmented view for a user of the vehicle, as the position of a user's head is usually not identical to that of the various sensors.

In a further embodiment, adjusting the user's virtual position comprises laterally and/or longitudinally shifting the user's virtual position in relation to the vehicle's position. Alternatively or in addition, the user's virtual position may be rotated in relation to the vehicle's position.

Adjusting the user's virtual position allows for several advantageous scenarios. For instance, a user of the vehicle, e.g., the driver, may be provided with the visual impression of a virtual driver's seat located on the bumper of the vehicle. This may enable a clear view on cross traffic when maneuvering out of narrow driveways or parking spaces. Further, the visual impression of the position of the virtual environment can dynamically be adapted to the user's virtual position, which is most useful to the vehicle's driver, depending on the circumstances and traffic situation. For example, when maneuvering the vehicle between two obstacles, while driving in a forward direction, the virtual position may be moved close to the front bumper to allow an optimal, unobstructed view of the remaining gap width and possible cross traffic. Accordingly, when switching to reverse gear the virtual position of the driver can be moved to the rear bumper.

In a further embodiment, a respective view of the vehicle's environment may be rendered for each of the one or more users of the vehicle.

As described above, each of the respective views may be adjusted to the needs of the respective user. As an example scenario, one of the users of the vehicle may be a co-pilot seated next to the driver. As the position of the co-pilot within the vehicle is different from that of the driver, the respective view should be specifically rendered for the co-pilot's position. However, in other scenarios it may be desired to provide the same view as rendered for the driver of the vehicle also to one or more other passengers of the vehicle.

Another aspect of the present invention relates to a computer-readable storage medium comprising instructions which, when executed by a computer, cause the computer to carry out the above described method.

Still another aspect of the present invention relates to a system comprising means for performing the steps of the above described method. The means comprise a perception module with a plurality of sensors, a visualization module, an interpretation module, and one or more displays. The plurality of sensors may comprise one or more LiDAR sensors; one or more cameras; one or more radar sensors; and/or one or more ultrasonic sensors.

### Brief Description of the Drawings

Various aspects of the present invention are described in more detail in the following by reference to the accompanying figures without the present invention being limited to the embodiments of these figures.
- Fig. 1: illustrates a flow chart for an example implementation of a method according to the invention;
- Fig. 2: illustrates an example implementation of an example system according to the invention;
- Fig. 3: illustrates a more detailed view of an example implementation of a system according to the invention;
- Fig. 4: illustrates an example for mounting positions of sensors at a vehicle.

### Detailed Description

The following is described for a driver of a vehicle. However, the invention may be applied to any user of a vehicle, such as a co-pilot seated next to the driver, or other passengers within the vehicle. The invention may also be applied for remote-controlling the device by a remote user, located at a remote location, by providing the rendered view of the vehicle's environment in addition or alternatively to the remote user.

Further, the following is described in the context of a rendered view of the vehicle's environment, which is provided to one or more displays to be used by one or more users of the vehicle. The view may be, e.g., a rendered image or stream of images, i.e., a video stream, provided to the display(s).

As already discussed above, the problems of on the one hand sight reduced visibility inside of a vehicle and on the other hand of a possibly overwhelming amount of information provided to a vehicle's user such as a driver by diverse sensors and user interfaces (such as acoustic information, driver monitor, mirrors, and windows) during both normal driving and low-speed maneuvers are mitigated or avoided by the present invention by
- fusing all information of diverse sensors into a consolidated three-dimensional (3D) visual model of the vehicle's environment; and
- providing a rendered view based on this model visually as an additional layer over the physically visible sight.

The invention may also take the driver's head position and orientation in relation to the environment into account, as well as (alternatively or in addition) the driver's viewing direction, to calculate a consistent perspective and to provide an unobstructed view of the environment to the driver. As an example scenario, the vehicle hull may be rendered to appear translucent to the driver. Several options exist to provide a corresponding visually augmented reality to the driver, from monitors to AR-glasses.

In example scenarios, several aspects in the rendered view of the vehicle's environment may be highlighted or otherwise adapted, e.g., to enhance visibility of corresponding aspects to the driver, and to draw the driver's attention to relevant objects in the vicinity of the vehicle, such as other road users or obstacles that may pose a risk of collision. Corresponding measures may be as follows:
- The shape of the vehicle, i.e., the vehicle's hull and its wheels, may be visualized, e.g., by a boundary line. More generally, markings indicating an extent of the vehicle may be augmented to the rendered view. The extent may comprise the shape of the vehicle's hull including the vehicle's wheels, and may further comprise, e.g., a safety buffer around the vehicle. Further, the vehicle's hull may be adjustable by a user of the vehicle, e.g., in the context of gamification.
- Given the vehicle's steering wheel angle and the driving orientation (such as forward and reverse), the predicted trajectory of the vehicle may be visually represented. This may comprise, e.g., visualizing the vehicle's wheels and the vehicle's outmost hull elements along the trajectory in the rendered view.
- Objects which pose a danger of collision are highlighted, e.g., by a bounding box.
- Traffic, i.e., other road users, detected by the sensors may be visualized.
- Relevant traffic, i.e., objects in the vehicle's environment, especially if visually obstructed but detected by, e.g., radar may be highlighted, e.g., by corresponding a bounding box.
- In addition, important information such distance measurements may be shown, e.g., distance to boardwalk, distance to adjacent parked vehicles, distance to obstacles such as walls, fences, pillars, poles, bicycles, electric scooters, etc. Visualization of such elements may also be color-coded, to enhance visibility for the driver, and to attract the driver's attention.

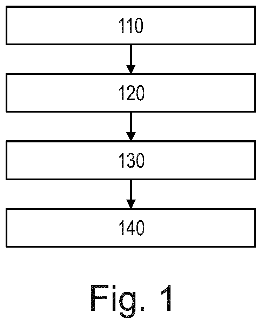

Fig. 1 illustrates a flow chart for an example implementation of a method according to the invention. Generally, the method provides an improved vision of a vehicle's environment for a driver of the vehicle.

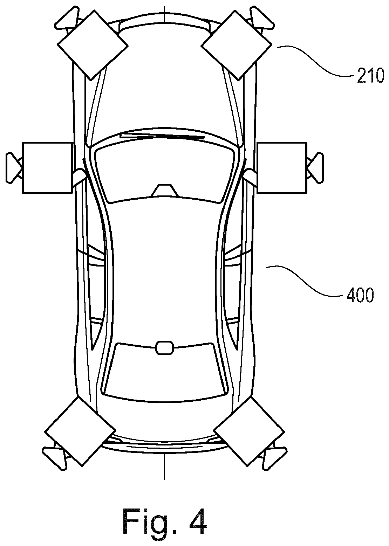

A first step 110 relates to aggregating, by a perception module 220 of the vehicle 400, sensor data provided by a plurality of sensors 210a..n of the vehicle 400. The plurality of sensors are mounted at the vehicle as shown in Fig. 4 and may comprise, e.g., one or more LiDAR sensors, one or more cameras mounted at different positions of the vehicle's hull, one or more radar sensors, and one or more ultrasonic sensors.

A second step 120 relates to constructing, by the perception module 220, a three-dimensional, 3D, visual world model, based on the aggregated sensor data. As a result, the constructed 3D visual world model represents the vehicle 400 and its environment. Constructing a 3D visual world model based on aggregated sensor data may be achieved in different ways. The following provides examples of corresponding methods for generating a 3D model from aggregated sensor data.

The aggregated sensor data from the plurality of sensors are processed and fused into a unified 3D model. Using, e.g., distance and direction information from detected reflections of, e.g., LiDAR or radar sensors, objects in the vehicle's environment can be captured and located in an underlying coordinate system, e.g., a world or vehicle coordinate system. Superimposed with the corresponding image data from optical cameras, object surfaces and their textures can be determined and added into the 3D model.

It should be noted that even without radar or LiDAR sensors and thus in the absence of corresponding sensor data, depth information can be obtained from two-dimensional optical image data:
Such alternative methods for obtaining distance information from two-dimensional optical image data include stereoscopy, depth determination by applying two or more sensors having different viewing angles, structure from motion, depth determination by temporal sequence of two or more individual images and sufficient large relative movement between an object to be recorded and the camera. Further alternatives include exploiting general geometric relationships, e.g., that an object that (partially) obscures another object must be located in front of the other object.

A third step 130 relates to rendering, by a visualization module 230 of the vehicle 400, a user's view of the vehicle's environment, based on the constructed 3D visual world model.

Finally, a fourth step 140 relates to providing, by the visualization module 230, the rendered view to one or more displays 250a..n for use by one or more users of the vehicle 400.

Generally, a first aspect of the present invention relates to fusing all sensor data into a 3D visual world model and providing a corresponding view to one or more displays for use by one or more users of a vehicle. In addition, and as a second aspect, the present invention allows detecting objects which may be relevant to the vehicle's driver in a specific scenario, thus providing further advantages.

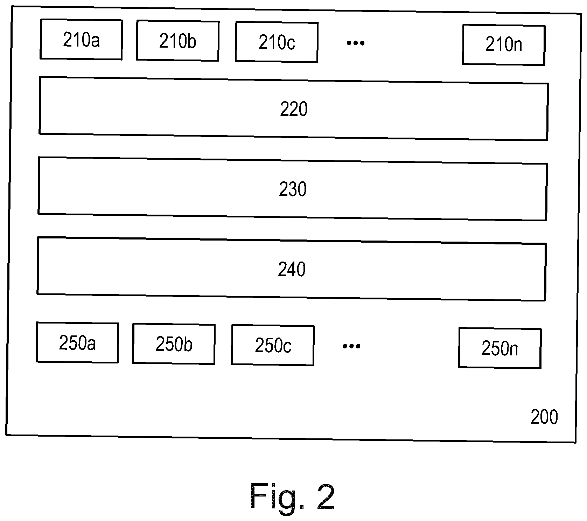

Fig. 2 illustrates an example implementation of a system 200 according to the invention. The system 200 comprises means for performing the steps of the method described above. In particular, the system 200 comprises the above discussed plurality of sensors 210a..n, the perception module 220, the visualization module 230, the interpretation module 240, and one or more displays 250a..n.

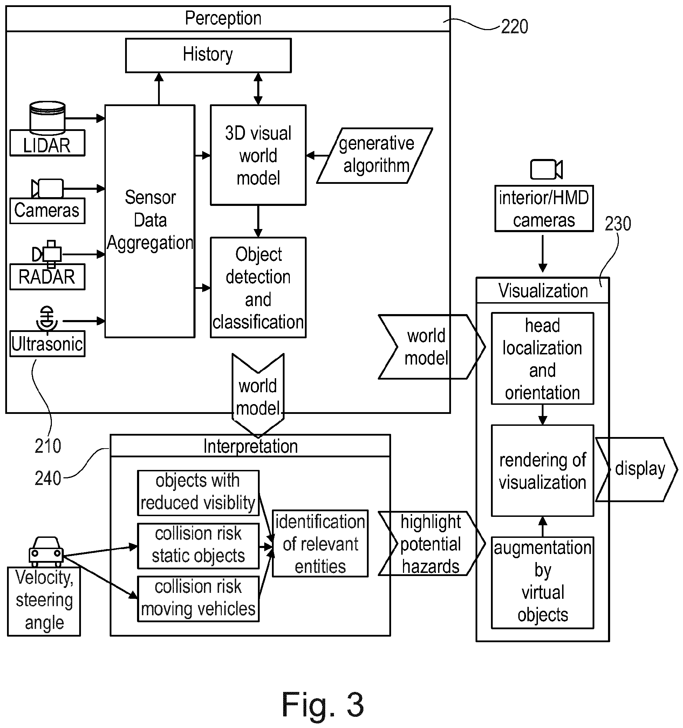

Fig. 3 illustrates a more detailed view of the system 200 according to the invention. As can be seen from Fig. 3, the system 200 may be generally divided into tree subsystems, or modules, which are as follows:
- the perception module 220, which fuses inputs of the sensors into a 3D visual world model of the vehicle's environment;
- the interpretation module 240, which identifies aspects of the environment that need to be augmented to or highlighted in the world model; and
- the visualization module 230, which renders an image, i.e., a view, of the augmented view of the environment, and which may also take into account location and orientation of the driver (i.e., the driver's head), as well as the driver's viewing direction.

In one embodiment, the perception module 210 comprises the plurality of sensors 210a..n, as shown in Fig. 3. Other configurations are possible in which the plurality of sensors 210a..n is coupled to the perception module. The plurality of sensors may comprise at least one or more of the following:
- One or more LiDAR scanners, to provide precise distance information which can be used to model a wireframe mesh of the environment and shapes of objects in the environment, which may be used to construct the 3D visual world model.
- One or more cameras, to capture the visual environment.
- One or more radar sensors, to provide information on objects in the environment, e.g., distance, shape, material, height, and orientation.
- One or more ultrasonic sensors, to provide information on obstacles in close distance to the vehicle.

To provide a full 3D representation, all areas around the vehicle must be covered by the one or more sensors.

Fig. 4 indicates an embodiment with potential localizations of the cameras at the vehicle. While Fig. 4 shows six cameras, other configurations may include different types of sensors, e.g., two 180° cameras, located opposite to each other at the vehicle's hull, to provide a complete 360° view of the vehicle's environment. Any combination of sensor types may be used in the system 200, to provide a full 3D representation of the vehicle's environment.

Generally, the data recorded by each individual sensor of the plurality of sensors 210 is algorithmically analyzed by the system 200. The detections, i.e., the aggregated data of the individual sensors 210 are then merged to form a consistent 3D visual world model of the environment. As the position of the driver's head is not identical to that of the sensors 210, an image (i.e., a view of the vehicle's environment) is rendered from the constructed 3D visual world model for the respective driver's perspective. This may either be done directly from images of, e.g., 360° environment cameras mounted at the vehicle, or a history buffer of the sensors (including previously recorded sensor data) is used, which enables a visualization based on previously recorded sensor data maintained in the history buffer. Alternatively, sensor data for the past may created generatively to be used for rendering the image of the environment. The constructed 3D visual world model of the vehicle's environment is handed over from the perception module 220 to the interpretation module 240 and the visualization module 230.

The interpretation module 240 is generally configured to identify and prioritize aspects in the environment which are considered as relevant to the vehicle's driver. Such aspects may include, e.g., objects which are difficult to perceive for the driver, e.g., because of poor lighting conditions such as darkness or foggy weather, or which are hidden to the naked eye, e.g., by the vehicle's hull. Corresponding objects are identified and added to a list of relevant objects. Taking into account vehicle parameters, e.g., the steering wheel position and the vehicle's driving orientation and velocity, the objects with which the vehicle would collide earliest are evaluated and classified according to respective hazardous aspects.

The term "relevant" is used to characterize objects in the vehicle's environment which, e.g., pose a danger of collision, and may comprise other road users (i.e., relevant traffic, especially if visually obstructed for the driver but detected by, e.g., radar), road objects, and obstacles, such as boardwalks, adjacent parked vehicles, walls, fences, pillars, poles, etc.

For example, relevant objects may be, e.g., curb stones, poles, and walls too low beneath the vehicle's windows to be seen by the driver under normal conditions, i.e., in a scenario where the driver's view to the vehicle's environment may be limited. For moving objects detected in the vehicle's vicinity, movement may predicted based on detected corresponding direction and velocity information, and the time to collision of a corresponding object with the vehicle may be assessed.

The items in the resulting list corresponding to the detected relevant objects may be sorted by urgency for the driver. Further, a selection is possible by, e.g., removing less relevant objects from the end of the sorted list of relevant objects, to maintain only a subset of more relevant objects in the sorted list of relevant objects, which in turn allows to balance the collision risk of the vehicle on the one hand, and the avoidance of an information overload for the driver on the other hand. The resulting list of relevant objects is handed over from the interpretation module 240 to the visualization module 230.

The visualization module 230 visualizes an augmented environment of the vehicle to the driver. This may be done in several ways, with varying costs and level of detail.
- The highest level of overview is achieved by the use of AR/VR headsets as visualization module 230. In this setup, the vehicle hull can be made completely invisible.
- Alternatively or in addition, a windshield head up display (HUD) system can be used which uses the reflection of monitors beneath the vehicle's windscreen to show augmented aspects overlayed to the visual environment.
- As a further alternative or in addition to the above scenarios, monitors, e.g., in the rear of the vehicle, on the vehicle's doors, or on the vehicle's console, may be used, to show an augmented visualization only in the direction of their orientation.

In any case, the driver's head orientation and position, as well as (alternatively or in addition) the driver's viewing direction, have to be known to render the view of the vehicle's environment with a consistent perspective. This can be accomplished by, e.g., interior cameras or by the cameras mounted on the AR/VR headset performing inside-out self-localization. Finally, the perspective-wise consistent image of the environment containing the augmented aspects is computed (i.e., rendered) and delivered as output by the visualization module 230 to one or more displays 250a..n. These displays are preferably located within the vehicle. However, as a user of the vehicle may also be a remote user as discussed above, one or more of the displays may also be provided external and remote to the vehicle, e.g., at a remote site, to enable remote supervision or remote control of the vehicle by a remote user.

The output of the visualization module 230 is provided as a rendered image stream which is presented to the driver, e.g., by using AR-goggle or by the use of displays. In front direction, a HUD may be used. Similarly, a display in rear direction may be used, which may also include stereoscopic displays. In some embodiments, 3D visualization is possible, e.g., by using lenticular lenses.

In a further embodiment, a failback mode is provided for a headset used to display the rendered image stream to the vehicle's driver. In the failback mode, only basic and nearly unprocessed video of the vehicle's environment is shown. The failback mode may be used in case of system and/or software errors, to ensure that the system operates stable despite such errors.

In a further embodiment, opening angles and states of the vehicle's door and windows are included in the 3D model and shown in the augmented view. Therefore, additional sensors of the system are used for determining these angles and states.

The present invention provides at least the following advantages:
The fusion of external sensors, the creation of a 3D model of the environment and its display in an AR environment allows a driver of a vehicle to focus on the relevant information amongst the overwhelming amount of available information. As a result, the vehicle driver no longer needs to switch back and forth between the various visual vehicle measures such as displays, mirrors, and windows, which are usually provided at various different positions in and around the vehicle. As a result, the present invention reduces the likelihood of missing, overlooking or misjudging relevant and important information.

Furthermore, the present invention allows to display objects that were previously barely or even not recognizable at all.

Further, the present invention allows to extend the field of vision from the fixed angle of, e.g., a reversing camera and the limited viewing angles through the vehicle's windows to a complete 360° environment.

Further, the present invention allows that any parts of the vehicle's bodywork, passengers, or other objects in the vehicle, can be completely blanked out or made translucent as required. This is particularly useful for vehicles that do not have a rear window at all due to their design, or where the view is obstructed, e.g., by passengers or a load, such as busses or trucks.

Embodiments of the present invention comprise one or more of the following aspects:
Beyond simply displaying the surroundings of a vehicle in an AR view, particularly relevant objects (e.g., objects which are important in a respective traffic situation) can be highlighted, and/or additional information can be displayed for these objects. This includes (but is not limited to):
- Highlighting road users or obstacles (e.g., using bounding boxes, color filters, false color display, etc.)
- Indication of the vehicle's own and other road users' predicted directions of movement
- Displaying distances from the vehicle to objects (e.g., to parked vehicles or a curbstone)
- Displaying information provided by additional driver assistance systems.

As discussed above, an example scenario may include adding one or more new objects to the rendered view. For instance, when switching to reverse gear, a sufficiently large virtual mirror is added in the rendered view to appear in front of the user, showing the environment in the rear of the vehicle. However, alternatively or in addition to adding objects to the rendered view, some scenarios may include removing or hiding an objected included in the rendered view at least partially, e.g., by fading out or making transparent the respective object or portions thereof. This may reduce the complexity of a scene presented by the rendered view, and may help the driver to focus on more relevant objects.

As the view of the vehicle's surroundings is not limited to the driver's position, an AR view can be created for any position and viewing direction as long as the vehicle's sensors are able to fully capture the surroundings for the respective perspective. This generally applies to positions between the mounting positions of the individual cameras, i.e., for any position within the vehicle's cabin.

In one embodiment, an AR view is provided to provide to the driver the visual impression of a virtual driver's seat located on the bumper of the vehicle. This may enable a clear view on cross traffic when maneuvering out of narrow driveways or parking spaces.

Further, the visual impression of the position of the virtual environment can dynamically be adapted to the virtual position, which is most useful to the vehicle's driver, depending on the circumstances and traffic situation. For example, when maneuvering the vehicle between two obstacles, while driving in a forward direction, the virtual position may be moved close to the front bumper to allow an optimal, unobstructed view of the remaining gap width and possible cross traffic; when switching to reverse gear the virtual position can be moved to the rear bumper.

In an embodiment, to avoid a rotation of the virtual perspective, which can lead to disorientation and nausea, when switching to reverse gear a sufficiently large virtual mirror in front of the driver (showing the rear of the vehicle) is created.

The AR view as provided by the present invention enables further diverse creative freedom. For instance, in an embodiment, depending on the direction of driving, a virtual rear-view mirror may be displayed in different sizes. While its size and shape are comparable to classic rear-view mirrors when driving straight ahead, the virtual rear-view mirror according to the invention can be enlarged to almost any size when reversing so that the driver has a complete overview of the area behind the vehicle even without turning around.

In further embodiments, functions of a classic dashboard are additionally embedded in the provided AR view. This may include, e.g.:
- Display of virtual control elements (tachometer, fuel gauge, etc.)
- Full HUD for navigation
- Interface to an entertainment system
- Color-coded climate zone display in the vehicle
- Highlighting of sightseeing items in the vehicle's environment
- Combination of warning display and source localization (e.g., highlighting of open door, or insufficient tire pressure)
- Individual choice between different virtual interior designs including additional roof window or even switching between saloon and convertible
- Gamification possibilities (e.g., movie themes may be merged with the current environment)
- Display of an artificial co-pilot (e.g., as a virtual contact person of a ChatGPT interface) or the avatar of a current telephone call partner

As discussed above, some scenarios in which the present invention may be applied include collision avoidance. However, there are various other scenarios in which the present invention may be applied, comprising:
- Providing information to users of a vehicle in one consistent visual interface, the information relating to, e.g., navigation, augmented points of interests, etc.
- Engineering, which may include showing detected objects, their classes, segmented environments, including measurements, estimated precision and reliability, demonstration of features for customers, etc.
- Entertainment, such as AR-games, changing visual experience of vehicle, including changing the type of the vehicle, e.g., to a convertible)
- Changing the perspective of the driver to offer a better or enhanced view, including, e.g., moving the perspective to the front of the vehicle to better see cross traffic, moving the perspective to the rear end of the vehicle, e.g., in a parking scenario.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

The system according to the present invention may be provided in a vehicle, such as automobiles, robots, motorbikes, trucks, etc.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. A computer-implemented method for improving vision of a vehicle's (400) environment for one or more users of the vehicle (400), the method comprising:
aggregating (110), by a perception module (220) of the vehicle (400), sensor data provided by a plurality of sensors (210a..n) of the vehicle (400);
constructing (120), by the perception module (220), a three-dimensional, 3D, visual world model, based on the aggregated sensor data, the 3D visual world model representing the vehicle (400) and the vehicle's (400) environment;
rendering (130), by a visualization module (230) of the vehicle (400), a user's view of the vehicle's (400) environment, based on the constructed 3D visual world model; and
providing (140), by the visualization module (230), the rendered view to one or more displays (250a..n) for use by one or more users of the vehicle (400).

2. The method of any of the preceding claims, wherein the aggregated sensor data comprises one or more of the following:
current sensor data;
previously recorded sensor data obtained from a sensor data history buffer; and
generated sensor data for complementing the aggregated sensor data, the generated sensor data comprising data regarding portions of the vehicle's (400) environment not visible to the plurality of sensors.

3. The method of claim 1 or 2, wherein the constructed 3D visual world comprises positional information and visual property information regarding the vehicle's (400) environment determined based on the aggregated sensor data.

4. The method of claim 3, further comprising:
detecting, by the perception module (220), one or more objects in the vicinity of the vehicle (400) based on the aggregated sensor data,
wherein constructing the 3D visual world model is further based on the detected objects, and
wherein rendering the view of the vehicle's (400) environment further comprises including visual representations of the detected objects in the rendered view.

5. The method of claim 4, further comprising:
identifying, by an interpretation module (240), one or more of the detected objects as objects relevant for one or more users of the vehicle (400).

6. The method of claim 5, wherein identifying, by the interpretation module (240), one or more of the detected objects as objects relevant for one or more users of the vehicle (400) comprises:
determining a set of driving parameters for the vehicle (400), including at least one of velocity and steering angle;
based on the determined set of driving parameters and the positional information and visual property information comprised in the 3D visual world model, determining objects as relevant for the one or more users of the vehicle (400) by evaluating, for each of the detected objects, if the respective detected object is one or more of the following:
an object with reduced visibility such that the object is only visible to the user to a limited extent;
a collision risk static object such that there is a risk of a collision between the vehicle (400) and the collision risk static object;
a collision risk moving object such that there is a risk of a collision between the vehicle (400) and the collision risk moving object.

7. The method of claim 6, wherein evaluating, for each of the detected objects, if the respective detected object is a collision risk static object comprises:
determining a time to collision of the vehicle (400) with the respective detected object based on the determined set of driving parameters and the 3D visual world model.

8. The method of claim 6 or 7, wherein evaluating, for each of the detected objects, if the respective detected object is a collision risk moving object comprises:
predicting a trajectory of the respective detected object; and
based on the predicted trajectory, the determined set of driving parameters and the 3D visual world model, determining a time to collision of the vehicle (400) with the respective detected object.

9. The method of claim 7 or 8, further comprising:
sorting the identified relevant objects based on the determined time to collision of the vehicle (400) with the respective detected object; and
removing less relevant objects from the sorted identified relevant objects, to maintain only a subset of most relevant objects.

10. The method of claims 4 to 9, wherein rendering the view of the vehicle's (400) environment further comprises one or more of the following:
augmenting one or more of the visual representations of the detected objects in the rendered view with additional visual information; and
augmenting the rendered view by adding at least one object to the rendered view.

11. The method of claim 10, wherein augmenting one or more of the visual representations of the detected objects in the rendered view with additional visual information comprises:
augmenting the one or more of the visual representations of the detected objects in the rendered view with a predicted trajectory of the vehicle (400); and/or
augmenting the one or more of the visual representations of the detected objects in the rendered view with markings indicating an extent of the vehicle (400) as a boundary line along the predicted trajectory.

12. The method of any of the preceding claims, wherein rendering the view of the vehicle's (400) environment further comprises:
determining the user's position in relation to the vehicle's (400) position in the environment based on a position and an orientation of the user's head and/or a viewing direction of the user;
based on the determining, adjusting a virtual position of the user in the 3D visual world model; and
rendering the view based on the adjusted virtual position of the user.

13. The method of claim 12, wherein adjusting the user's virtual position comprises at least one of:
laterally and/or longitudinally shifting the user's virtual position in relation to the vehicle's (400) position; and
rotating the user's virtual position in relation to the vehicle's (400) position.

14. The method of any of the preceding claims,
wherein rendering (130) a view of the vehicle's (400) environment comprises rendering, for each of the one or more users of the vehicle (400), a respective view of the vehicle's (400) environment.

15. A computer-readable storage medium comprising instructions which, when executed by a computer, cause the computer to carry out the method of any of claims 1 to 14.

16. A system (200) comprising means for performing the steps of any of claims 1 to 14, the means comprising:
a perception module (220), comprising a plurality of sensors (210a..n);
visualization module (230);
an interpretation module (240); and
one or more displays (250a..n),
wherein the plurality of sensors (210a..n) comprise at least one of the following:
one or more LiDAR sensors;
one or more cameras;
one or more radar sensors; and
one or more ultrasonic sensors.

17. A vehicle (400) comprising the system of claim 16.
